# EUROPÄISCHE PATENTSCHRIFT

(11) **EP 3 647 513 B1**
(45) Veröffentlichungstag und Bekanntmachung des Hinweises auf die Patenterteilung: **20.11.2024**
(21) Anmeldenummer: 19204769.4
(22) Anmeldetag: 23.10.2019
(51) Int. Cl.: E04G 15/06, E04G 21/18, H02G 3/04, H02G 3/12

(54) **ROHRBEFESTIGUNG**
PIPE ATTACHMENT
FIXATION TUBULAIRE

(30) Priorität: 29.10.2018 CH 13212018
(43) Veröffentlichungstag der Anmeldung: 06.05.2020
(73) Patentinhaber: Kaiser GmbH & Co. KG, 58579 Schalksmühle (DE); Agro AG, 5502 Hunzenschwil (CH)
(72) Erfinder: SANZ-MARTIN, Javier, 58762 Altena (DE); RITTER, Mathias, 58553 Halver (DE); MEIER, Niklaus, 5037 Muhen (CH)
(74) Vertreter: Rentsch Partner AG

(56) Entgegenhaltungen:
- EP-A1- 3 584 898
- DE-A1- 102013 022 124
- DE-B3- 102014 107 085
- KR-B1- 100 778 289

## Beschreibung

Die Erfindung betrifft eine Rohrbefestigung zur Befestigung eines Rohres an einer Armierung in einer Betonwand.

### HINTERGRUND DER ERFINDUNG

Im Betonbau von Gebäuden werden vor dem Giessen von Betonelementen, wie Wände, Decken und Böden, für das Anbringen elektrischer Installationen, wie Schalter, Steckdosen, Lampen, Apparate oder für Verzweigungen, Leerrohre verlegt. Die Rohre werden hierbei derart verlegt, dass diese an dazu vorgesehenen Stellen vorzugsweise mit einer geringen Sichtfläche an der Wand austreten. Für einen sauberen Rohrabschluss an der Wand werden Rohrbefestigungen verwendet, welche das Rohrende üblicherweise normal zur Schalung der zu giessenden Wand, respektive zur späteren Wandoberfläche, halten und befestigen. Nach dem Giessen eines Betonelementes werden dann Elektroleitungen durch die Rohrbefestigung in das Rohr und so in das Betonelement eingeführt und dort verlegt.

Miteinander in Verbindung stehende Betonelemente, wie beispielsweise eine Betonwand und ein daran randseitig anschliessender Betonboden, werden aus technischen Gründen nacheinander gegossen. Um eine Elektroleitung von einem Betonelement in ein später gegossenes benachbartes Betonelement zu überführen, werden ebenfalls Rohrbefestigungen verwendet. Die Rohrbefestigungen nehmen ein Rohrende in der Regel passgenau auf und befestigen dieses entsprechend ausgerichtet vor dem Giessen des Betons an der Schalung. So werden Stosskanten an Übergängen der Betonteile vermieden und das Einziehen von Leitungen über die Übergänge von einem Betonelement in das nächste erleichtert.

Aus dem Stand der Technik sind Rohrbefestigungen für solche Rohrenden bekannt, welche an der Schalung festgenagelt oder festgeklebt werden. Ebenfalls sind Rohrbefestigungen bekannt, welche das Rohrende vor dem Anbringen der Schalungselemente an der Armierung an der gewünschten Position befestigen.

Aus der DE 10 2014 107085 B3 ist eine Rohrbefestigung mit den Merkmalen des einleitenden Teils des Anspruchs 1 bekannt. H

Ein Problem bei Rohrbefestigungen zur Anbringung an einer Armierung besteht darin, dass diese in der Regel nicht für variable Betondeckungen verwendet werden können. Unter Betondeckung wird die Stärke des Betonelementes über der Armierung oder der Abstand von der Armierung zur Schalung verstanden. Ein weiteres Problem besteht darin, dass die an einer Armierung befestigbaren Rohrbefestigungen oftmals unhandlich sind und in Bereichen mit begrenzten Platz, wie Übergangsbereichen zwischen zwei Betonelementen, nur umständlich einbaubar sind. Eine Aufgabe der Erfindung ist es, eine Rohrbefestigung bereitzustellen, welche den Einbau der Rohrbefestigung erleichtert.

Eine erfindungsgemässe Rohrbefestigung zur Befestigung eines Rohrendes an einer Armierung in einer zu giessenden Betonwand, gemäss Anspruch 1, umfasst einen röhrenförmiger Grundkörper und eine flügelförmige Halterung welche zum Anliegen der Rohrbefestigung an der Armierung dient. Der röhrenförmige Grundkörper dient zu Aufnahme eines Rohrendes. Hierzu weist der Grundkörper eine rückseitige Öffnung auf. Der Grundkörper kann sich in seine Längsrichtung gekrümmt oder gerade von der rückseitigen zu einer vorderseitigen Öffnung erstrecken. Die Vorderseite der Rohrbefestigung ist hierbei in die Richtung der Schalung definiert an der die Rohrbefestigung angebracht ist, respektive endet. Die Rückseite der Rohrbefestigung ist diejenige Seite an der das Rohrende eingeführt wird. Um das Rohrende an der Rohrbefestigung zu fixieren kann der Grundkörper zudem ein Rastmittel zum Verrasten des Rohrendes an dem Grundkörper aufweisen. Die Rastmittel können beispielsweise durch Ausbuchtungen an einer Aussenseite oder an einer Innenseite des röhrenförmigen Grundkörpers gebildet sein und nach dem Verrasten einen Hinterschnitt in Längsrichtung des Grundkörpers mit einem wellenförmigen Rohr bilden. Alternativ kann das Rohr über eine Klemmung mit der Rohrbefestigung verbunden werden. Beispielsweise kann der Grundkörper zumindest bereichsweise aufklappbar gestaltet sein, sodass ein Rohrende in dem aufgeklappten Teil des Grundkörpers platziert und durch Schliessen des Grundkörpers festgeklemmt wird. Andere Befestigungsmöglichkeiten sind jedoch ebenfalls denkbar. Die Teile der Rohrbefestigung werden mit Vorteil durch Spritzgiessen aus einem oder mehreren Kunststoffen hergestellt.

Erfindungsgemäss steht die flügelförmige Halterung seitlich und im Wesentlich parallel zur Schalung vom Grundkörper ab und ist bezüglich dem Grundkörper verstellbar angeordnet. Die mindestens eine flügelförmige Halterung ist in Längsrichtung des röhrenförmigen Grundkörpers verstellbar. Mit Vorteil ist die mindestens eine flügelförmige Halterung ergänzend ebenfalls in Umfangsrichtung des röhrenförmigen Grundkörpers verstellbar. Eine Verstellbarkeit in Längsrichtung des Grundkörpers ermöglicht den flexiblen Einbau in unterschiedliche Wanddicken, respektive Betondeckungen und eine vereinfachte Ausrichtung der Rohrbefestigung. Eine Verstellbarkeit in Umfangsrichtung ermöglicht einen vereinfachten Einbau speziell in engen oder schlecht zugänglichen Orten in der zu giessenden Wand.

Die mindestens eine flügelförmige Halterung kann zur Befestigung des Grundkörpers an der Armierung einen Auflageabschnitt in Form eines Bügels oder eines umlaufenden Stegs oder in Form eines einzelnen Stegs oder zwei parallel verlaufenden Stegen aufweisen, die jeweils zur Auflage auf der Armierung geeignet sind. Je nach Ausführungsform können die Bügel oder Stege für eine bessere Steifigkeit einen H-, U-, V- oder L-förmigen Querschnitt aufweisen. Weiterhin können die Bügel resp. Stege ein- oder beidseitig mit einer Verzahnung oder mit Rillen versehen sein, welche eine exakte Positionierung der Dose auf der Armierung unterstützen und ein ungewolltes Verschieben verhindern. Die mindestens eine flügelförmige Halterung kann weiter ein Befestigungsmittel aufweisen, mittels dem diese an einer Armierung befestigbar ist. Das Befestigungsmittel kann z.B. durch eine beweglich angeordnete Lasche gebildet werden, welche gegen die Kraft einer Feder auslenkbar ist.

Die Lasche kann so dazu genutzt werden die flügelförmige Halterung gegen die Armierung zu drücken und zu fixieren. Alternativ kann die Halterung jedoch auch über ein andersartig gestaltetes Befestigungsmittel an der Armierung befestigt werden. Beispielsweise können die Befestigungsmittel in einer Variante als Mittel zum Anbringen von Draht zum Verrödeln der Halterung an der Armierung ausgeführt sein.

Die mindestens eine flügelförmige Halterung ist über einen Adapter mit dem Grundkörper wirkverbunden. Der Adapter kann hierfür röhrenförmig ausgestaltet sein und ist vorzugsweise konzentrisch zu dem Grundkörper, bzw. zu einem Abschnitt des Grundkörpers, ausgerichtet und ist zu diesem verdrehbar befestigbar.

In einem montierten Zustand ist hierzu ein röhrenförmiges Mittelteil des Adapters mit einer rückseitigen Öffnung mit der vorderseitigen Öffnung des Grundkörpers (oder vice versa) wirkverbunden, sodass eine sich durch den Grundkörper und den Adapter erstreckende Durchgangsöffnung gebildet wird. Die Öffnungen bzw. Wirkverbindungen sind mit Vorteil rotationssymmetrisch ausgebildet, sodass der Grundkörper und der Adapter ebenfalls in einem in Bezug auf die Längsrichtung zueinander verdrehten Zustand wirkverbunden sein können.

Die flügelförmige Halterung kann an den Adapter angeformt oder als separates Teil ausgestaltet und mit diesem wirkverbunden sein. Hierzu können der Adapter und die flügelförmige Halterung je ein zusammenwirkendes Kupplungsmittel aufweisen. Das Kupplungsmittel kann eine Führungsschiene und/oder Rastmittel aufweisen, mit welchen der Adapter und die flügelförmige Halterung wirkverbindbar sind. Für einen einfachen Einbau ist es von Vorteil, wenn eine oder mehrere Führungsschienen in Richtung der Längsachse des Adapters ausgerichtet sind.

In einer Variante ist die mindestens eine flügelförmige Halterung als separates Teil ausgestaltet und ist sowohl in einer ersten als auch in einer zweiten Position mit dem Adapter über das Kupplungsmittel verbindbar. Vorzugsweise ist hierfür die flügelförmige Halterung in der zweiten Position bezüglich der ersten Position um 180 grad um die Längsachse der Halterung (im Wesentlichen parallel zur Schalung) gedreht. Um die flügelförmige Halterung in dessen Längsrichtung auf zwei Arten mit unterschiedlichen Abständen zur Schalung zu befestigen, kann der Auflageabschnitt der flügelförmigen Halterung gegenüber dem an der Halterung vorgesehen Teil des Kupplungsmittels aussermittig angeordnet sein. Beispielsweise kann die flügelförmige Halterung in dessen Längsrichtung geknickt oder gebogen ausgebildet sein.

Um eine abgestufte Positionierungen in Längsrichtung des Grundkörpers zu ermöglichen, kann am Kupplungsmittel in einer weiteren Variante auch eine Rastzunge vorgesehen sein. Auf diese Weise ist die flügelförmige Halterung höhenverstellbar und der Abstand zwischen Auflageabschnitt und Schalung kann individuell an die gewünschte Betondeckung angepasst werden.

Der Adapter weist mindestens einen von dem röhrenförmigen Mittelteil seitlich abstehenden Arm auf, an welchem die flügelförmige Halterung angebracht ist. Je nach Ausgestaltung kann das Kupplungsmittel an dem Arm angebracht sein oder die Halterung kann direkt an dem Arm angeformt sein. Mit Vorteil ist der Arm abgewinkelt, sodass sich dieser zumindest bereichsweise in eine Längsrichtung des röhrenförmigen Mittelteils und zu diesem beabstandet erstreckt. Der Arm kann eine T-förmig oder L-förmig Struktur aufweisen. Ein L-förmiger Arm, welcher sich von der Schalung weg, bzw. in Richtung der rückseitigen Öffnung des Grundkörpers, erstreckt, ist vorteilhaft da es eine besonders dünne Betondeckung über der Armierung ermöglicht. Für eine stabile Befestigung des Rohres sind vorzugsweise mindestens zwei Arme diametral gegenüber an dem Adapter angeordnet. Alternativ können um den Umfang des Mittelteils des Adapters auch mehrere Arme verteilt sein. Beispielsweise sind vier Arme, mit jeweils zwei diametral gegenüberliegenden Armen, denkbar. Bei dieser Variante müssen nicht alle Arme mit flügelförmigen Halterungen versehen sein. Beispielsweise können lediglich zwei benachbarte (um 90 grad versetzte) Arme mit je einer flügelförmigen Halterung versehen sein. Die Arme bewirken, dass die rückseitige Öffnung des Grundkörpers zur Einführung des Rohrendes von einem Montageraum umgeben ist, d.h. dass die rückseitige Öffnung freisteht. Dies ermöglicht eine einfache und platzsparende Montage eines Rohres an der rückseitigen Öffnung.

Für eine besonders platzsparende Ausführungsform kann sich der mindestens eine abgewinkelte Arm in Längsrichtung von der Schalung wegweisend und entlang des röhrenförmigen Mittelteils und über den Mittelteil und ggf. über den mit diesem wirkverbundenen Grundkörper erstrecken. Das in der Betonwand verlaufende Rohr vollzieht in der Regel erst kurz vor dessen Ausführung aus der Wand einen Richtungswechsel, sodass das Rohrende normal zur Wand, bzw. zur Schalung, endet. Bei geringen Dicken des zu giessenden Betonelementes verkleinert sich also der Radius des Rohres vor der Rohrbefestigung. Eine in Längsrichtung des Adapters, bzw. des Grundkörpers, kurz ausgestaltete Rohrbefestigung mit nach Aussen verlagerten und an einen Arm angebrachten Kupplungsmitteln ergibt also den Vorteil eines möglichst grossen Rohrradius. Auf diese Weise wird das spätere Einziehen von Elektroleitungen vereinfacht.

Das an die Rohrbefestigung anzuschliessende Rohr wird in der Regel vor dem Giessen von Beton angeschlossen. Um das Eindringen von Beton in die Rohrbefestigung von der anderen Seite der Durchgangsöffnung der Rohrbefestigung zu verhindern, ist die Durchgangsöffnung an dem anderen Ende zumindest vorübergehend während des Giessens von Beton durch eine Abdeckung verschliessbar. Die Abdeckung weist mit Vorteil eine Installationsöffnung auf, welche durch einen heraustrennbaren Wandbereich verschlossen ist. Die Abdeckung kann an dem Adapter und/oder dem Grundkörper angeformt sein. Alternativ kann die Abdeckung als separates Teil ausgestaltet sein, welches mit dem Grundkörper und/oder dem Adapter wirkverbindbar ist. Beim Giessen von Beton kann die Rohrbefestigung so an die Schalung angebracht werden, dass der heraustrennbare Wandbereich nach dem Giessen und nach dem Abbau der Schalung zugänglich ist, und dieser entsprechend entfernt werden kann. Für das Heraustrennen des Wandbereiches entlang einer definierten Kontur kann dieser von einer umlaufenden Sollbruchlinie umgeben sein. Diese kann durch mindestens eine Dünnstelle oder andersartige Sollbruchelemente gebildet sein. Um zu vermeiden, dass Beton auf den heraustrennbaren Wandbereich gelangt, kann eine um den heraustrennbaren Wandbereich angeordnete Dichtung vorhanden sein. Je nach Ausgestaltung der Rohrbefestigung kann die Dichtung an der Abdeckung oder dem Adapter oder dem Grundkörper angeordnet sein. Diese dichtet die Rohrbefestigung gegen die Schalung so ab, dass kein Beton auf den heraustrennbaren Wandbereich gelangt und dieser zur Bildung der Installationsöffnung ohne Probleme heraustrennbar ist. Für eine einfache Abtrennung kann die Abdeckung hierzu eine Aussparung in dem heraustrennbaren Wandbereich aufweisen, in welche ein Werkzeug wie beispielsweise die Spitze eines Schraubendrehers, hereingesteckt werden kann um den Wandbereich aus der Abdeckung zu hebeln und die Installationsöffnung freizugeben.

Je nach Anwendung kann es von Vorteil sein, dass der Grundkörper mindestens ein Abstützelement zum Abstützen der Rohrbefestigung an einer Schalung aufweist. Das Abstützelement erstreckt sich mit Vorteil zumindest abschnittsweise normal zur Schalung; d.h. in die Längsrichtung des röhrenförmigen Mittelteils des Adapters, wenn vorhanden. Das Abstützelement kann direkt oder indirekt, d.h. über weitere Elemente, wie zum Beispiel über ein Distanzstück, mit einer Schalung wirkverbindbar sein. Dies kann die vorderseitige oder die rückseitige Schalung der zu giessenden Wand sein.

Alternativ oder in Ergänzung kann die mindestens eine flügelförmige Halterung ein Wirkverbindungsmittel zum Wirkverbinden einer weiteren Rohrbefestigung bzw. einer weiteren benachbarten flügelförmigen Halterung aufweisen. Diese Wirkverbindung kann dazu dienen multiple Rohrbefestigungen zueinander auszurichten. Alternativ oder in Ergänzung kann mindestens eine flügelförmige Halterung einer Rohrbefestigung auch multiple über Wirkverbindungsmittel verbundene Grundkörper an einer Armierung fixieren.

Der Adapter mit der mindestens einen fügelförmigen Halterung dient zur Anlage zur späteren Befestigung der Rohrbefestigung an einer Armierung. Alternativ kann der Grundkörper jedoch ebenfalls ohne Adapter über die Abdeckung an der Schalung befestigbar sein. Dies kann beispielsweise durch Festnageln oder Festkleben der Abdeckung an der Schalung geschehen. Für eine modulare Bauweise der Rohrbefestigung, die beide Befestigungsarten erlaubt, ist der Adapter vorzugsweise derart ausgestaltet, dass dessen rückseitiges Ende, respektive die rückseitige Öffnung, komplementär zu dessen vorderseitiges Ende, respektive rückseitige Öffnung, ausgebildet ist. D.h., dass das rückseitige Ende des Adapters und das rückseitige Ende der Abdeckung vorzugsweise derart ausgestaltet sind, sodass entweder das eine oder das andere mit dem vorderseitigen Ende, bzw. der vorderseitigen Öffnung des Grundkörpers dichtend wirkverbindbar bzw. ineinander steckbar ist.

Ebenso sind das vorderseitige Ende (Öffnung) des Adapters und das vorderseitige Ende (Öffnung) des Grundkörpers vorzugsweise derart ausgestaltet, sodass entweder das eine oder das andere mit der Abdeckung dichtend verbindbar bzw. ineinander steckbar ist. Somit ist das rückseitige Ende (des Mittelteils) des Adapters komplementär zum vorderseitigen Ende (des Mittelteils) des Adapters ausgebildet, d.h., dass diese eine zueinander gegensätzliche Form aufweisen.

Anhand der in den nachfolgenden Figuren gezeigten Ausführungsbeispiele und der dazugehörigen Beschreibung werden Aspekte der Erfindung näher erläutert. Es zeigen:
- Fig. 1: Eine erste Ausführungsform einer Rohrbefestigung mit Halteelementen gemäss der Erfindung in einem montieren Zustand in perspektivischer Ansicht;
- Fig. 2: Die erste Ausführungsform der Rohrbefestigung gemäss Figur 1 in einer Ansicht von der Seite;
- Fig. 3: Ein Adapter der Rohrbefestigung gemäss Figur 1 in perspektivischer Ansicht;
- Fig. 4: Der Adapter gemäss Figur 3 in einer Ansicht von der Seite;
- Fig. 5: Die erste Ausführungsform der Rohrbefestigung gemäss Figur 1 in einer perspektivischen Explosionsansicht;
- Fig. 6: Der Adapters gemäss Figur 3 mit flügelförmigen Halterungen in einer Explosionsansicht von der Seite;
- Fig. 7: Eine zweite Ausführungsform einer Rohrbefestigung gemäss der Erfindung in einem montieren Zustand in perspektivischer Ansicht;
- Fig. 8: Die zweite Ausführungsform der Rohrbefestigung gemäss Figur 7 in einer Ansicht von der Seite.

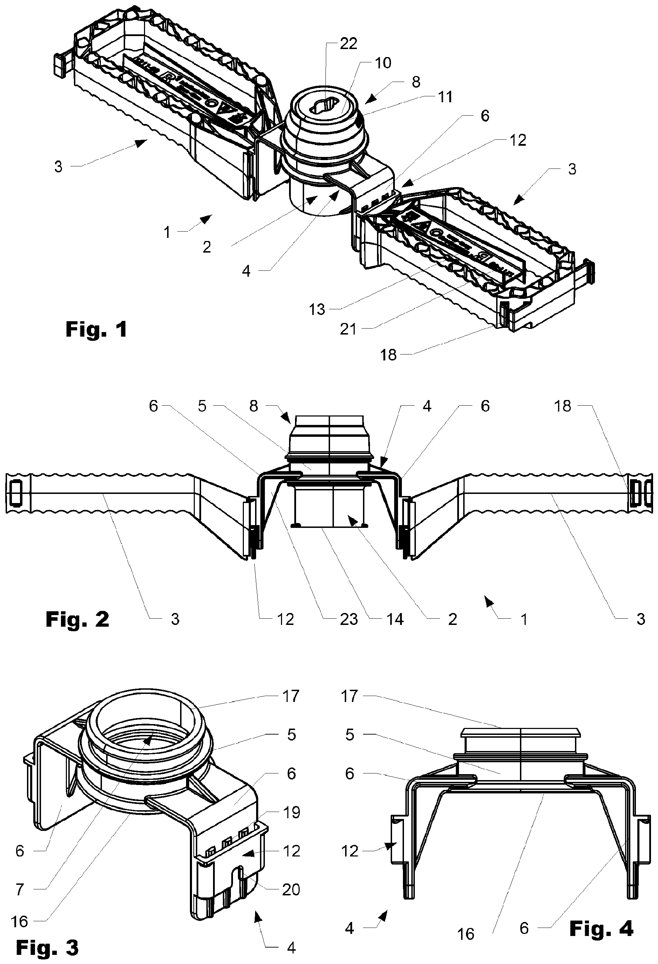

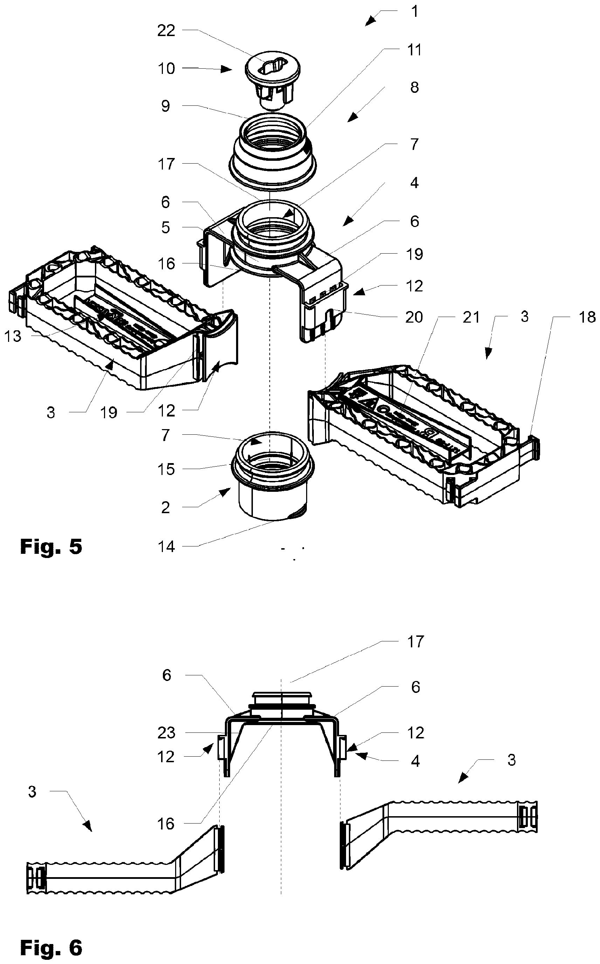

**Figur 1** zeigt eine erste Ausführungsform einer erfindungsgemässen Rohrbefestigung 1 in einer perspektivischen Ansicht. **Figur 2** zeigt die gleiche Ausführungsform in einer Ansicht von der Seite und **Figur 5** in einer perspektivischen Ansicht in einem auseinandergebauten Zustand.

Die Rohrbefestigung 1 der ersten Ausführungsform umfasst einen röhrenförmigen Grundkörper 2 und zwei flügelförmige Halterungen 3. Weiterhin ist ein Adapter 4 und optional eine Abdeckung 8 vorhanden. Der Adapter 4 ist in der gezeigten Ausführungsform zwischen dem Grundkörper 2 und der Abdeckung 8 angeordnet. Eine rückseitige Öffnung 14 des Grundkörpers 2 dient hierbei zur Einführung eines Rohrendes (nicht gezeigt). Die vorderseitige Öffnung 1 5 des Grundkörpers 2 ist in der Figur 1 mit einer rückseitigen Öffnung 16 eines röhrenförmigen Mittelteils 5 des Adapters 4 wirkverbunden, sodass eine sich durch den Grundkörper 2 und den Adapter 4 erstreckende Durchgangsöffnung 7 gebildet wird. Die vorderseitige Öffnung 17 des Mittelteils 5 wird von der Abdeckung 8 verschlossen. Die Vorderseite der Rohrbefestigung 1 ist hierbei in die Richtung der Abdeckung 8, bzw. der Schalung definiert, zu welcher die Abdeckung 8 zeigt. Die Rückseite der Rohrbefestigung 1 ist diejenige Seite an der das Rohrende eingeführt wird.

Mit Vorteil liegt die Abdeckung 8 an der Schalung an. Auf diese Weise kann so nach dem Heraustrennen eines heraustrennbaren Wandbereichs 10 der Abdeckung 8 eine Installationsöffnung 9 gebildet werden. Durch die Installationsöffnung 9 kann ein Installateur Kabel oder ähnliches durch die Rohrbefestigung 1 in das Rohr einführen. Um zu vermeiden, dass Beton auf den heraustrennbaren Wandbereich 10 gelangt, ist eine um den diesen angeordnete Dichtung 11 vorhanden, welche an der Abdeckung 8 angeordnet sein. Diese dichtet die Rohrbefestigung 1 gegen die Schalung so ab, dass kein Beton auf den heraustrennbaren Wandbereich 10 gelangt und dieser zur Bildung der Installationsöffnung 9 heraustrennbar ist. Für eine einfache Abtrennung kann die Abdeckung 8 eine Aussparung 22 in dem heraustrennbaren Wandbereich 10 aufweisen, in welche ein Werkzeug wie beispielsweise die Spitze eines Schraubendrehers, hereingesteckt werden kann um den Wandbereich 10 aus der Abdeckung 8 zu hebeln und die Installationsöffnung 9 freizugeben.

An dem röhrenförmigen Mittelteil 5 des Adapters 4 sind zwei diametral gegenüberliegende Arme 6 angebracht. Die flügelförmigen Halterungen 3 können an den Armen 6 über Kupplungsmittel 12 angebracht sein. In anderen Ausführungsformen ist es jedoch ebenfalls möglich die Halterungen 3 direkt an dem Adapter 4 anzuformen. Der Adapter 4 ist in **Figur 3** und **Figur 4** in einer Detailansicht zu sehen.

Der röhrenförmige Mittelteil 5 des Adapters 4 erstreckt sich von einer rückseitigen Öffnung 16 zu einer vorderseitigen Öffnung 17. Der Adapter 4 weist zudem zwei seitlich abstehende, angewinkelte und diametral gegenüberliegende Arme 6 auf. Versteifungsrippen 23 können die abgewinkelten Arme 6 zusätzlich stützen. An einem Arm 6 ist ein Kupplungsmittel 12 zum Wirkverbinden der flügelförmigen Halterungen 3 angebracht. In der gezeigten Ausführungsform wird das Kupplungsmittel 12 durch je zwei Führungsschienen 19 gebildet. Eine Führungsschiene 19 ist hierbei an einer Halterung 3 angeordnet während die gegenteilige Führungsschiene 19 an dem Adapter 4 angeordnet ist. Die Führungsschienen 19 sind in Längsrichtung des röhrenförmigen Mittelteils 5 ausgerichtet und können aus dieser Richtung zusammengeschoben werden. Mit Vorteil weist das Kupplungsmittel 12 zudem ein Rastmittel 20 auf, welche eine Halterung an dem Adapter 4 nach dem Einschieben gegenseitig verrastet. Die Halterungen 3 können hierbei in zwei voneinander unterschiedlichen Positionen an dem Adapter 4 befestigt werden, wie in **Figur 6** näher dargestellt. Die erste Position und die zweite Position der flügelförmigen Halterung 3 unterscheiden sich dahingehend, dass eine Position der Rohrbefestigung 1 bezüglich der Armierung unterschiedlich ist, d.h. die Rohrbefestigung 1 ist für unterschiedliche Betondeckungen verwendbar. Für die Befestigung kann die flügelförmige Halterung 3 Befestigungsmittel 13 aufweisen. In den gezeigten Ausführungsformen ist das Befestigungsmittel 13 eine beweglich angeordnete Lasche 21, welche gegen die Kraft einer Feder auslenkbar ist. Die Lasche 21 dient dazu, die flügelförmige Halterung 3 gegen die Armierung zu drücken und dort zu fixieren. In Ergänzung kann die mindestens eine flügelförmige Halterung ein Wirkverbindungsmittel 18 zum Wirkverbinden einer weiteren Rohrbefestigung 1 bzw. einer weiteren benachbarten flügelförmigen Halterung aufweisen.

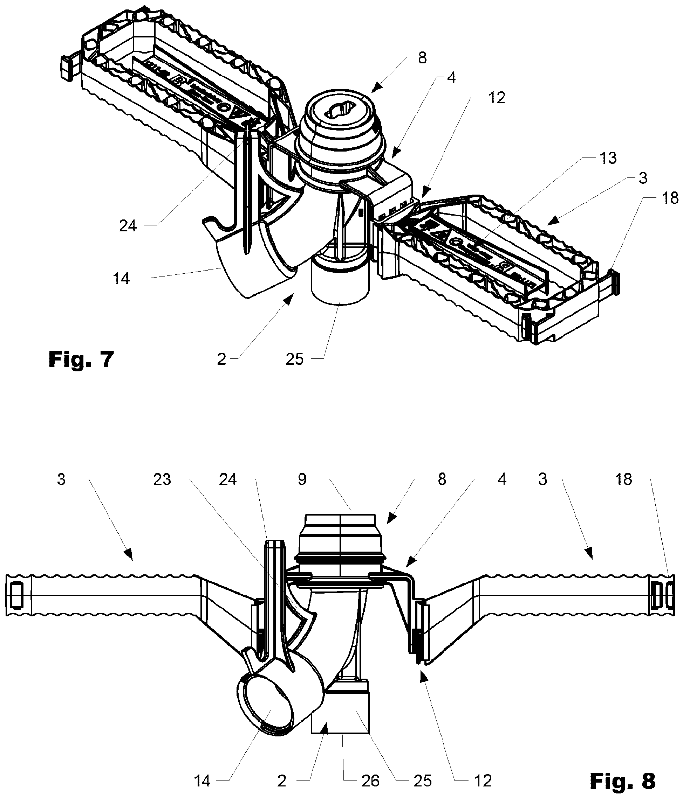

**Figur 7** und **Figur 8** zeigen eine zweite Ausführungsform einer erfindungsgemässen Rohrbefestigung 1 in einer perspektivischen Ansicht und einer Ansicht von der Seite. In der gezeigten Ausführungsform ist der Grundkörper 2 gekrümmt. Der Adapter 4 und die Abdeckung 8 sowie die beiden flügelförmigen Halterungen 3 unterscheiden sich nicht von denen der ersten Ausführungsform. Bei dem Einbau dieser Rohrbefestigung 1 liegt die Abdeckung 8 an der Schalung der zu giessenden Wand an. Um eine zusätzliche Stabilität zu gewährleisten kann der gekrümmte röhrenförmige Grundkörper 2 wie in der gezeigten Ausführungsform mindestens ein Abstützelement aufweisen, welcher zur Abstützung an einer Schalung dient. Das Abstützungselement kann die Rohrbefestigung hierbei entweder an der vorderseitigen Schalung (Schalung an der die Abdeckung anliegt) oder einer rückseitigen Schalung direkt oder indirekt abstützen. Ein Beispiel eines solchen Abstützelementes ist das erste Abstützelement 24, welches über Versteifungsrippen mit einer Aussenseite des Grundkörpers verbunden ist. Das erste Abstützelement 24 erstreckt sich normal zur Schalung; d.h. im dargestellten Fall in die Längsrichtung des röhrenförmigen Mittelteils 5 des Adapters 4. Ein weiteres Beispiel eines Abstützelementes ist das zweite Abstützelement 25, welches sich ebenfalls vom Grundkörper 2 in Richtung normal zur Schalung erstreckt. Das zweite Abstützelement 25 kann indirekt mit der rückseitigen Schalung wirkverbindbar sein, indem dieses mit einem Distanzstück wirkverbunden wird. In dem gezeigten Beispiel weist das zweite Abstützelement 25 an seinem rückseitigen Ende eine Aufnahmeöffnung 26 auf, in welche ein Distanzstück (nicht dargestellt) zur Abstützung an der rückseitigen Schalung eingesteckt werden kann.

### LISTE DER BEZUGSZEICHEN

| | | | |
|---|---|---|---|
| 1 | Rohrbefestigung | 15 | Vorderseitiges Öffnung (Grundkörper) |
| 2 | Grundkörper | | |
| 3 | Halterung | 16 | Rückseitiges Öffnung (Mittelteil) |
| 4 | Adapter | 17 | Vorderseitiges Öffnung (Mittelteil) |
| 5 | Mittelteil | | |
| 6 | Arm | 18 | Wirkverbindungsmittel |
| 7 | Durchgangsöffnung | 19 | Führungsschienen |
| 8 | Abdeckung | 20 | Rastmittel |
| 9 | Installationsöffnung | 21 | Lasche |
| 10 | Wandbereich | 22 | Aussparung |
| 11 | Dichtung | 23 | Versteifungsrippe |
| 12 | Kupplungsmittel | 24 | Erstes Abstützelement |
| 13 | Befestigungsmittel | 25 | Zweites Abstützelement |
| 14 | Rückseitiges Öffnung (Grundkörper) | 26 | Aufnahmeöffnung |

## Patentansprüche

1. Rohrbefestigung (1) zur Befestigung eines Rohrendes an einer Armierung in einer Betonwand umfassend
a. einen röhrenförmigen Grundkörper (2) zur Aufnahme eines Rohrendes in eine Längsrichtung des röhrenförmigen Grundkörpers (2), wobei der röhrenförmige Grundkörper (2) eine rückseitige Öffnung (14) zur Aufnahme des Rohrendes aufweist,
b. mindestens eine vom röhrenförmigen Grundkörper (2) seitlich abstehende flügelförmige Halterung (3) zum Anliegen an der Armierung,
**dadurch gekennzeichnet, dass**
c. die mindestens eine flügelförmige Halterung (3) über einen Adapter (4) mit dem Grundkörper (2) wirkverbunden ist,
d. die flügelförmige Halterung bezüglich dem röhrenförmigen Grundkörper (2) in Längsrichtung des Grundkörpers (2) verstellbar angeordnet ist, und
**e.** der Adapter (4) ein röhrenförmiges Mittelteil (5) und mindestens einen seitlich abstehenden Arm (6) umfasst.

2. Rohrbefestigung (1) gemäss Patentanspruch 1, **dadurch gekennzeichnet, dass** die mindestens eine flügelförmige Halterung (3) in Umfangsrichtung des röhrenförmigen Grundkörpers (2) verstellbar ist.

3. Rohrbefestigung (1) gemäss einen der vorangehenden Patentansprüche, **dadurch gekennzeichnet, dass** die mindestens eine flügelförmige Halterung (3) an dem Adapter (4) angeformt ist.

4. Rohrbefestigung (1) gemäss einen der vorangehenden Patentansprüche 1 oder 2, **dadurch gekennzeichnet, dass** die mindestens eine flügelförmige Halterung (3) in mindestens einer ersten und einer zweiten Position mit dem Adapter (4) verbindbar ist.

5. Rohrbefestigung (1) gemäss einen der vorangehenden Patentansprüche, **dadurch gekennzeichnet, dass** der seitlich abstehende Arm (6) abgewinkelt ist, sodass sich dieser zumindest bereichsweise in eine Längsrichtung des röhrenförmigen Mittelteils (5) erstreckt.

6. Rohrbefestigung (1) gemäss Patentanspruch 5, **dadurch gekennzeichnet, dass** der Arm (6) T-förmig oder L-förmig ist.

7. Rohrbefestigung (1) gemäss einem der vorangehenden Patentansprüche, **dadurch gekennzeichnet, dass** mindestens zwei Arme (6) diametral gegenüber an dem Adapter (4) angeordnet sind.

8. Rohrbefestigung (1) gemäss einem der vorangehenden Patentansprüche, **dadurch gekennzeichnet, dass** ein rückseitiges Ende des Adapters (16) komplementär zu einem vorderseitigen Ende des Adapters (17) ausgebildet ist.

9. Rohrbefestigung (1) gemäss einem der vorangehenden Patentansprüche, **dadurch gekennzeichnet, dass** eine Durchgangöffnung (7) der Rohrbefestigung (1) von einer Abdeckung (8) verschlossen ist.

10. Rohrbefestigung (1) gemäss Patentanspruch 9, **dadurch gekennzeichnet, dass** die Abdeckung (8) eine Installationsöffnung (9) aufweist, welche durch einen heraustrennbaren Wandbereich (10) verschlossen ist.

11. Rohrbefestigung (1) gemäss Patentanspruch 10, **dadurch gekennzeichnet, dass** die Abdeckung (8) eine um die Installationsöffnung (9) herumlaufende Dichtung (11) aufweist.

12. Rohrbefestigung (1) gemäss einem der vorangehenden Patentansprüche, **dadurch gekennzeichnet, dass** der Grundkörper (2) mindestens ein Abstützelement (19) zum Abstützen der Rohrbefestigung (1) an einer Schalung ausweist.

## Claims

1. Tube fastening (1) for fastening a tube end to a reinforcement in a concrete wall, comprising
a. a tube-shaped main body (2) for receiving a tube end in a longitudinal direction of the tube-shaped main body (2), the tube-shaped main body (2) having a rear opening (14) for receiving the tube end,
b. at least one wing-shaped holder (3) protruding laterally from the tube-shaped main body (2) for bearing against the reinforcement,
**characterized in that**
c. the at least one wing-shaped holder (3) is interconnected with the main body (2) via an adapter (4),
d. the wing-shaped holder is arranged so as to be adjustable in the longitudinal direction of the main body (2) relative to the tube-shaped main body (2), and
e. the adapter (4) comprises a tube-shaped middle part (5) and at least one laterally protruding arm (6).

2. Tube fastening (1) according to claim 1, **characterized in that** the at least one wing-shaped holder (3) is adjustable in the circumferential direction of the tube-shaped main body (2).

3. Tube fastening (1) according to one of the preceding claims, **characterized in that** the at least one wing-shaped holder (3) is shaped to the adapter (4).

4. Tube fastening (1) according to one of the preceding claims 1 or 2, **characterized in that** the at least one wing-shaped holder (3) can be connected to the adapter (4) in at least a first and a second position..

5. Tube fastening (1) according to one of the preceding claims, **characterized in that** the laterally protruding arm (6) is angled so that it extends at least partially in a longitudinal direction of the tube-shaped middle part (5).

6. Tube fastening (1) according to claim 5, **characterized in that** the arm (6) is T-shaped or L-shaped.

7. Tube fastening (1) according to one of the preceding claims, **characterized in that** at least two arms (6) are arranged diametrically opposite one another on the adapter (4).

8. Tube fastening (1) according to one of the preceding claims, **characterized in that** a rear end of the adapter (16) is designed to be complementary to a front end of the adapter (17).

9. Tube fastening (1) according to one of the preceding claims, **characterized in that** a through opening (7) of the tube fastening (1) is closed by a cover (8).

10. Tube fastening (1) according to claim 9, **characterized in that** the cover (8) has an installation opening (9) which is closed by a detachable wall region (10).

11. Tube fastening (1) according to claim 10, **characterized in that** the cover (8) has a seal (11) which extends around the installation opening (9).

12. Tube fastening (1) according to one of the preceding claims, **characterized in that** the main body (2) has at least one supporting element (19) for supporting the tube fastening (1) on a formwork.

## Revendications

1. Fixation de tube (1) pour la fixation d'une extrémité de tube à une armature dans un mur en béton, comprenant
a. un corps de base tubulaire (2) pour recevoir une extrémité de tube dans une direction longitudinale du corps de base tubulaire (2), dans lequel le corps de base tubulaire (2) présente une ouverture arrière (14) pour recevoir l'extrémité de tube,
b. au moins un support en forme d'aile (3) dépassant latéralement du corps de base tubulaire (2) et destiné à s'appliquer contre l'armature,
**caractérisé en ce que**
c. le au moins un support en forme d'aile (3) est interconnecté avec le corps de base (2) par un adaptateur (4),
d. le support en forme d'aile est disposé de manière réglable par rapport au corps de base tubulaire (2) dans la direction longitudinale du corps de base (2), et
e. l'adaptateur (4) comprend une partie centrale tubulaire (5) et au moins un bras (6) faisant saillie latéralement.

2. Fixation de tube (1) selon la revendication 1, **caractérisée en ce que** le au moins un support en forme d'aile (3) est réglable dans la direction circonférentielle du corps de base tubulaire (2).

3. Fixation de tube (1) selon l'une des revendications précédentes, **caractérisée en ce que** le au moins un support en forme d'aile (3) est moulé sur l'adaptateur (4).

4. Fixation de tube (1) selon l'une des revendications précédentes 1 ou 2, **caractérisée en ce que** le au moins un support en forme d'aile (3) peut être relié à l'adaptateur (4) dans au moins une première et une deuxième position.

5. Fixation de tube (1) selon l'une des revendications précédentes, **caractérisée en ce que** le bras (6) faisant saillie latéralement est coudé de manière à s'étendre au moins partiellement dans une direction longitudinale de la partie centrale tubulaire (5).

6. Fixation de tube (1) selon la revendication 5, **caractérisée en ce que le** bras (6) est en forme de T ou de L.

7. Fixation de tube (1) selon l'une des revendications précédentes, **caractérisée en ce qu'**au moins deux bras (6) sont arrangés diamétralement opposés l'un à l'autre sur l'adaptateur (4).

8. Fixation de tube (1) selon l'une des revendications précédentes, **caractérisée en ce qu'**une extrémité arrière de l'adaptateur (16) est conçue pour être complémentaire d'une extrémité avant de l'adaptateur (17).

9. Fixation de tube (1) selon l'une des revendications précédentes, **caractérisée en ce qu'**une ouverture de passage (7) de la fixation de tube (1) est fermée par un couverture (8).

10. Fixation de tube (1) selon la revendication 9, **caractérisée en ce que** le couverture (8) présente une couverture de montage (9) qui est fermée par une zone de paroi (10) détachable.

11. Fixation de tube (1) selon la revendication 10, **caractérisée en ce que** le couverture (8) comporte un joint (11) qui s'étend autour de l'couverture de montage (9).

12. Fixation de tube (1) selon l'une des revendications précédentes, **caractérisée en ce que** le corps de base (2) comporte au moins un élément de support (19) pour le support de la fixation de tube (1) sur un coffrage.
